Europäisches Patentamt

European Patent Office

Office européen des brevets

(19)

(11) Numéro de publication: **0 012 662**
**A1**

## (12) DEMANDE DE BREVET EUROPEEN

(21) Numéro de dépôt: 79400955.5

(22) Date de dépôt: 04.12.79

(51) Int. Cl.³: **G 06 F 3/04**

(30) Priorité: **06.12.78 FR 7834416**

(43) Date de publication de la demande: **25.06.80**
**Bulletin 80/13**

(84) Etats contractants désignés: **DE GB IT**

(71) Demandeur: **COMPAGNIE INTERNATIONALE POUR L'INFORMATIQUE CII-HONEYWELL BULL (dite CII-HB), 94, avenue Gambetta, F-75020 Paris (FR)**

(72) Inventeur: **Sauger, Guy Georges Roger, 3, rue du Maréchal Vaillant, F-94130 Nogent sur Marne (FR)**
Inventeur: **Marret, Georges, 52, rue Saint-Fargeau, F-75020 Paris (FR)**

(74) Mandataire: **Lincot, Georges, 94, avenue Gambetta, F-75960 Paris Cedex 20 (FR)**

(54) Dispositif de priorité rotative dans un système de traitement de données.

(57) Le dispositif se compose d'une ou plusieurs mémoires programmables dans lesquelles sont enregistrées des tables de priorité en nombre égal au nombre d'unités périphériques mis en jeux dans le système de traitement de données, les moyens d'adressage de ces mémoires comprennent des premiers moyens pour pointer sur l'adresse de la table correspondant à l'unité périphérique la dernière servie, et des seconds moyens de sélection à l'intérieur de la table adressée par les premiers moyens du numéro d'ordre de l'unité périphérique qui devra être servie.

Application: Systéme de traitement de données.

FIG 1

0012662

- 1 -

DISPOSITIF DE PRIORITE ROTATIVE DANS UN SYSTEME DE
TRAITEMENT DE DONNEES

La présente invention concerne un dispositif
électronique permettant l'allocation des priorités à
donner aux unités de périphérique en fonctionnement
dans un système de traitement de données. On rappelle
qu'un système de traitement de données se compose
généralement, mais non exclusivement, d'une ou plusieurs unités de traitement reliées par l'intermédiaire
d'unités de commande appropriées, à des unités de
périphériques telles que des mémoires à disques, unité
de bandes magnétiques imprimantes, etc... Ces
différentes unités périphériques sont souvent reliées
par une même liaison ou câbles électriques à une même
unité de traitement, ce qui définit un système
centralisé où l'échange d'informations ou de données
entre l'unité de traitement et les unités périphériques
ne peut pas avoir lieu simultanément mais
séquentiellement. Il ne peut y avoir à un instant donné
qu'une seule unité périphérique connectée à l'unité de
traitement, mais est-il nécessaire lorsqu'un système de
traitement de données comprend plusieurs unités
périphériques de définir les priorités pour l'échange
des informations entre l'unité de traitement et les
différentes unités périphériques.

- 2 -

Différents dispositifs existent dans ce domaine, notamment ceux dans lesquels les priorités sont allouées par niveaux hiérarchiques où des unités périphériques désignées comme très prioritaires peuvent interrompre l'échange d'informations des unités périphériques moins prioritaires et ceux à priorité rotative dans lesquels il est alloué à chaque unité de périphérique un numéro de priorité disinct et dans lesquels la priorité est donnée à celle dont le numéro de priorité suit directement celui de l'unité avec laquelle l'unité de traitement a terminé un échange d'informations.

La présente invention a trait aux dispositifs à priorité rotative. Dans ces dispositifs, l'affectation de la priorité se fait à l'aide de circuits logiques traditionnels, portes "et/ou" inverseurs, bascules de mémorisations et revêtent des structures très compliquées lorsque le nombre des unités périphériques connectées à l'unité de traitement est grand. Comme autre inconvénient, ces dispositifs à structure câblée interdisent pratiquement toutes modifications de configuration du système de traitement de données sans transformations complète du câblage des circuits. D'autre part, l'augmentation de la complexité des circuits entraîne aussi une complexité dans les tests qui doivent être accomplis.

Le dispositif selon l'invention permet de palier les inconvénients qui précèdent en diminuant considérablement le volume des circuits utilisés en rendant très commode les modifications de configuration du système de traitement de données et en facilitant

- 3 -

les opérations de test du dispositif.

Le dispositif à priorité rotative selon l'invention permet de donner la priorité à l'unité périphérique appelante dont le numéro d'ordre suit dans la permutation circulaire le numéro d'ordre de l'unité qui a déjà été servie.

L'affectation de la priorité a lieu par adressage d'une ou plusieurs mémoires programmables contenant des tables de priorité, l'adressage s'effectuant à partir du numéro d'ordre de l'unité périphérique la dernière servie.

Plus précisément le dispositif à priorité rotative se caractérise en ce qu'il comprend une ou plusieurs mémoires programmables dans lesquelles sont enregistrées des tables de priorité en nombre égal au nombre d'unités périphériques connectées au dispositif, lesdites mémoires programmables comprenant des moyens d'adressage et des moyens de lecture, lesdits moyens d'adressage comprenant des premiers moyens pour pointer sur l'adresse de la table correspondant à l'unité périphérique qui a été la dernière servie ainsi que des seconds moyens de sélection à l'intérieur de la table adressée par les premiers moyens du numéro d'ordre de l'unité périphérique qui devra être servie.

Une autre caractéristique de l'invention consiste dans le fait que les premiers moyens d'adressage sont reliés directement aux dits moyens de lecture de sorte que le contenu des informations mémorisées dans lesdits moyens de lecture sert de mot pour la sélection des tables de priorité.

- 4 -

Une autre caractéristique de l'invention consiste dans le fait que les seconds moyens de sélection du numéro d'ordre de l'unité périphérique qui suit celui de l'unité la dernière servie sont constitués par le restant des circuits d'adressage des mémoires PRØM autres que ceux utilisés pour l'adressage des tables de priorité chaque entrée respective desdits circuits d'adressage étant reliée par une liaison électrique à une seule unité périphérique de sorte que chaque unité périphérique demandant à être servie puisse se siganler, sur la liaison qui lui est affectée, par un signal dont l'état électique est différent de celui existant lorsque ladite unité ne fait pas de demande de service.

D'autres caractéristiques et avantages de li'nvnetion apparaîtront mieux à l'aide de la description faite au regard des dessins qui va suivre.

La figure 1 représente le dispositif à priorité rotative selon l'invention.

Les figures 2 à 9 représentent le codage des tables nécessaires à l'affectation de la priorité à l'unité périphérique appelante dont le numéro d'ordre suit, dans la rotation des numéros de priorité, celui de l'unité périphérique la dernière desservie.

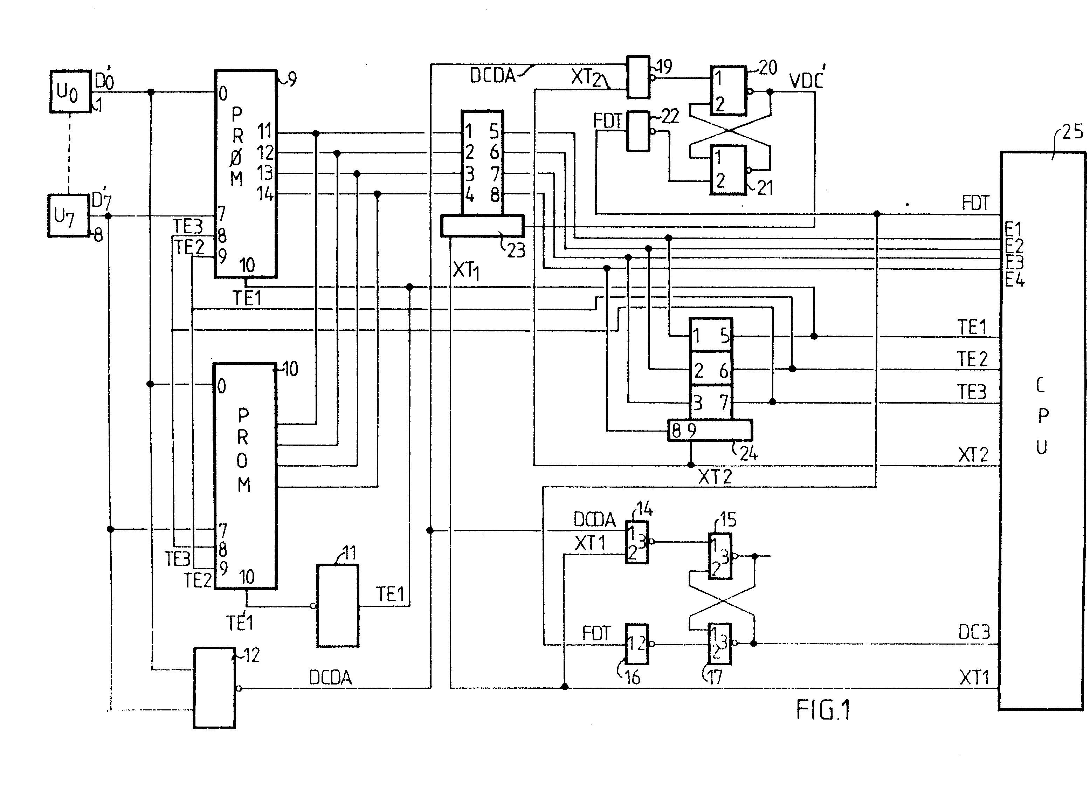

Le dispositif à priorité rotative représenté à la figure 1 est interposé entre les unités périphériques 1 à 8 et l'unité de traitement CPU 25. Ces diverses unités sont bien connues de l'homme de l'art, on pourra pour plus de précision sur la constitution des unités

- 5 -

périphériques se reporter au livre d'Ivan FLORES intitulé "Peripheral devices" et édité chez Prentice Hall Inc Englewood Cliffs N.J., de même un type d'unité centrale peut être trouvée dans la description du brevet des Etats-Unis 3 400 371.

Ce dispositif comprend deux mémoires mortes programmables (PRØM) 9 et 10. Ces types de mémoire ont la propriété de pouvoir être directement programmées par l'utilisateur. Dans un type particulier de réalisations de ces mémoires, chaque cellule mémoire est équipée d'un fusible. Les informations sont enregistrées à l'aide d'un programmateur spécialisé qui mémorise des bits d'informations par claquage des fusibles, à des emplacements déterminés dans la mémoire PRØM. Ces types de mémoire sont, eux aussi, bien connus et il n'est pas nécessaire de donner plus d'explications sur leur fonctionnement. Dans une réalisation préférée de l'invention, il sera possible d'utiliser le circuit SN... commercialisé par la Société... Sur le schéma de la figure 1 les entrées 0 ) 11 des mémoires PRØM 9 et 10 sont reliées respectivement aux sorties $D_0x$ à $D_7x$ des unités périphériques 1 à 8.

Ces sorties peuvent prendre indifféremment deux états de potentiel représentatifs de deux états binaires 0 et 1. L'état bianire 0 correspond à un signal électrique de potentiel O volt, l'état 1 binaire correspond à un signal électrique de potentiel électrique autre que 0 volt. L'état 1 binaire apparaît sur une sortie $D_0x$ à $D_7x$ des unités périphériques dès qu'une unité est disponible pour mettre ou recevoir des informations ou des données sur le bus de données (non représenté mais comme on sait) reliant chaque unité périphérique à l'unité centrale de traitement de données CPU 25. Les sorties 11 à 14 des mémoires PRØM 9 et 10 sont reliées respectivement aux entrées 1 à 4 de la mémoire tampon 23 dont les sorties 5 à 7 délivrent les signaux $E_1$, $E_2$, $E_3$, vers l'unité centrale de traitement et vers les entrées 1 à 3 d'un autre registre tampon 24. Le verrouillage de registre tampon 23 est assuré par l'application du signal UDC[*] émis par la sortie 3 de la porte "non et" 20 constituant avec les circuits "non et" 19, 20, 21 et 22 un basculeur du type SR abréviation du terme anglo saxon "set, reset". La mise dans l'état 1 logique de cette bascule est assurée par le signal DCDA appliqué sur l'entrée 1 de la porte "non et" et la mise dans l'état 0 est assurée par le signal FDT appliqué sur l'entrée 2 de la porte "non et" 22. La synchronisation est assurée par le signal d'horloge $XT_2$ émis par l'unité centrale de traitement. La sortie 8 du registre tampon 23 est reliée à l'entrée 8 de verrouillage du registre tampon 24. L'entrée 9 du registre 24 reçoit signal d'échantillonnage $XT_2$ en provenance de l'unité centrale CPU 25. Le registre tampon 24 délivre sur ses sorties 5, 6, 7 les signaux $TE_3$, $TE_2$, et $TE_1$, les signaux $TE_3$ ET $TE_2$ sont appliqués respectivement sur les entrées 8 et 9 d'adressage des mémoires PRØM 9 et 10. Le signal $TE_1$ est appliqué sur l'entrée d'adressage 10 de la mémoire PRØM 9 et à l'entrée 1 de l'amplificateur inverseur 11 dont la sortie 2 se trouve reliée à l'entrée 10 de la mémoire PRØM 10. La porte "non et" 12 a ses entrées 1 à 8 reliées respectivement aux sorties des unités périphériques 1 à 8, sa sortie 9 est reliée à l'entrée 2 d'une porte ET 13 dont l'entrée 1 reçoit le signal VDC[*] délivrée par la sortie 3 de la porte "non et" 20 et dont la sortie 3 délivre le signal DCDA qui est transmis d'une part à l'entrée de la porte "non et" 19 et d'autre part à l'entrée 1 d'une porte "non et" 14 constituant avec l'ensemble des portes "et" 14, 15, 16 et 17 une bascule "SR" dont la sortie formée par la sortie de la porte "non et" 17 délivre le signal DC 3 de demande de cycle vers l'unité centrale de traitement.

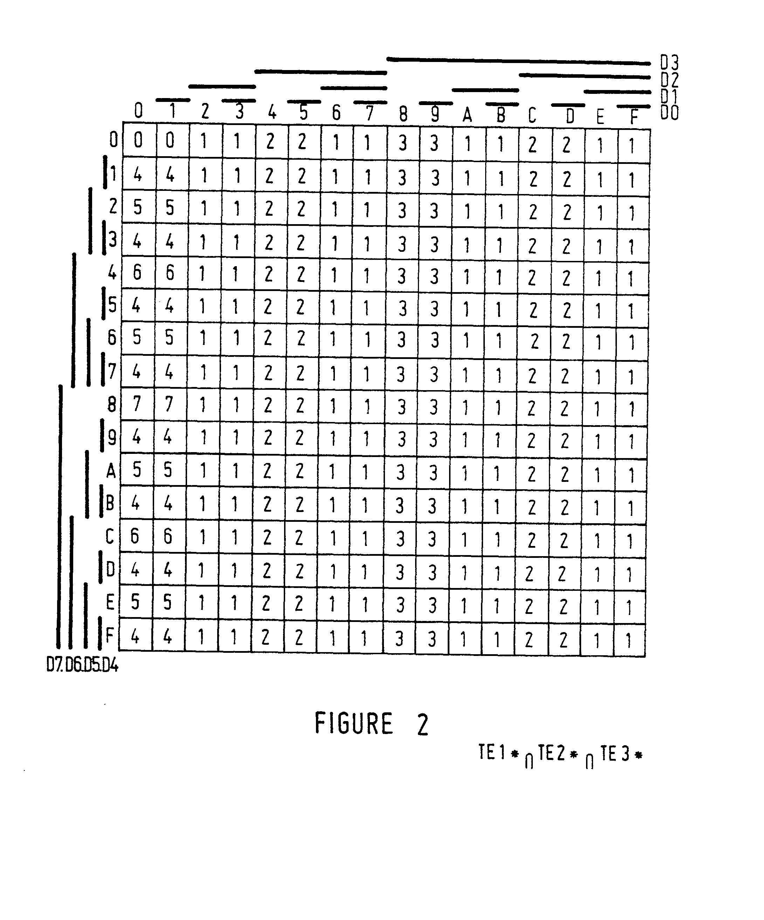

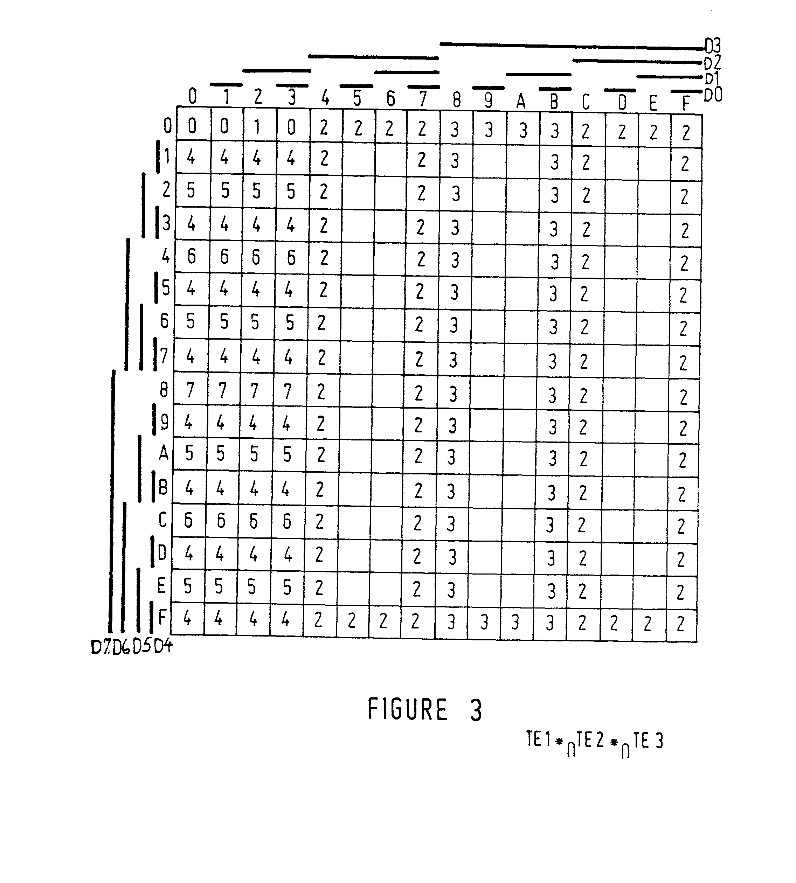

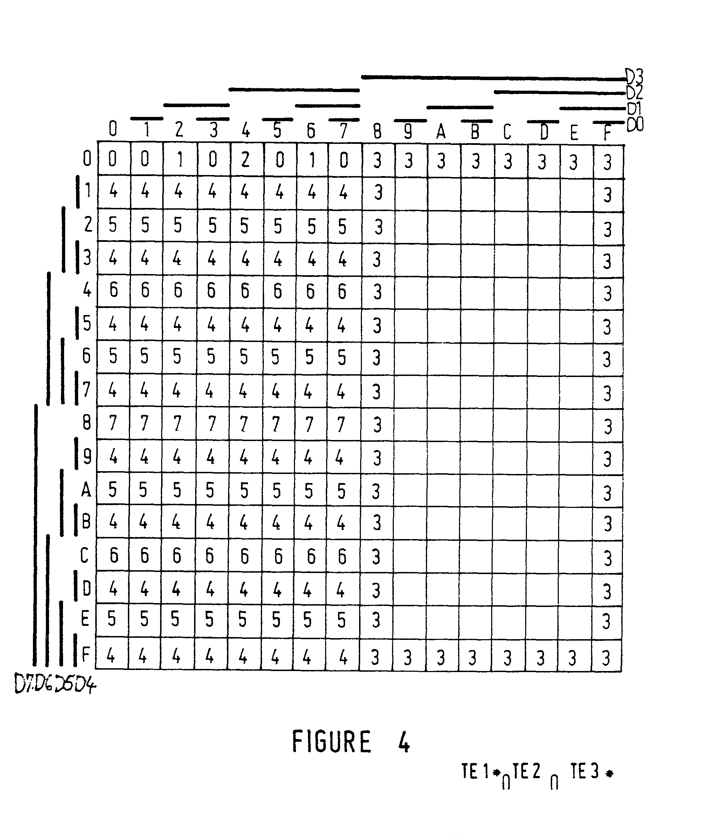

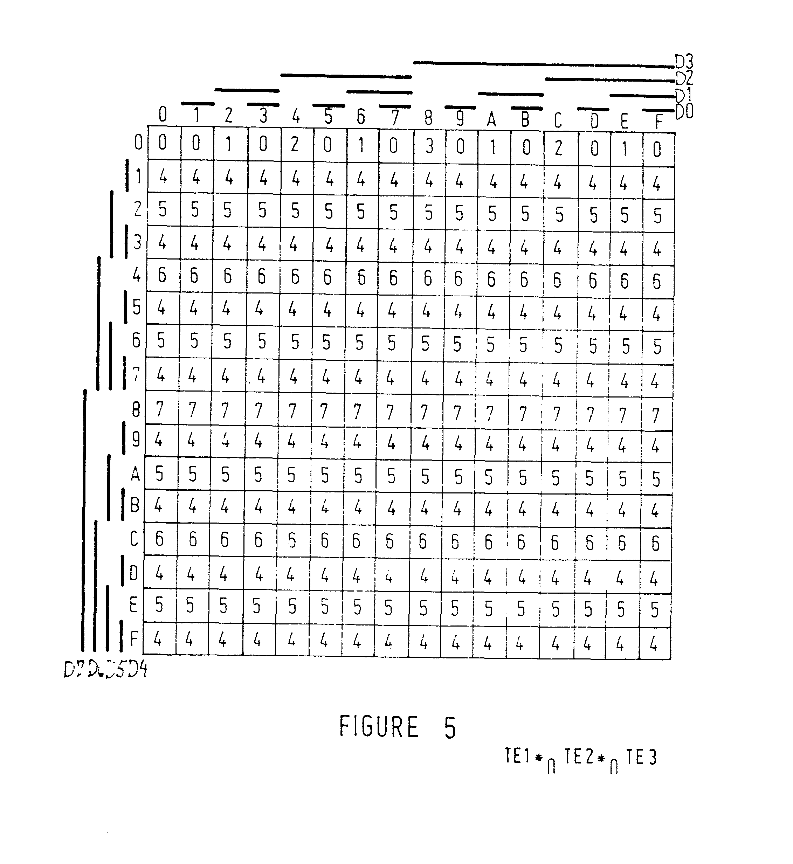

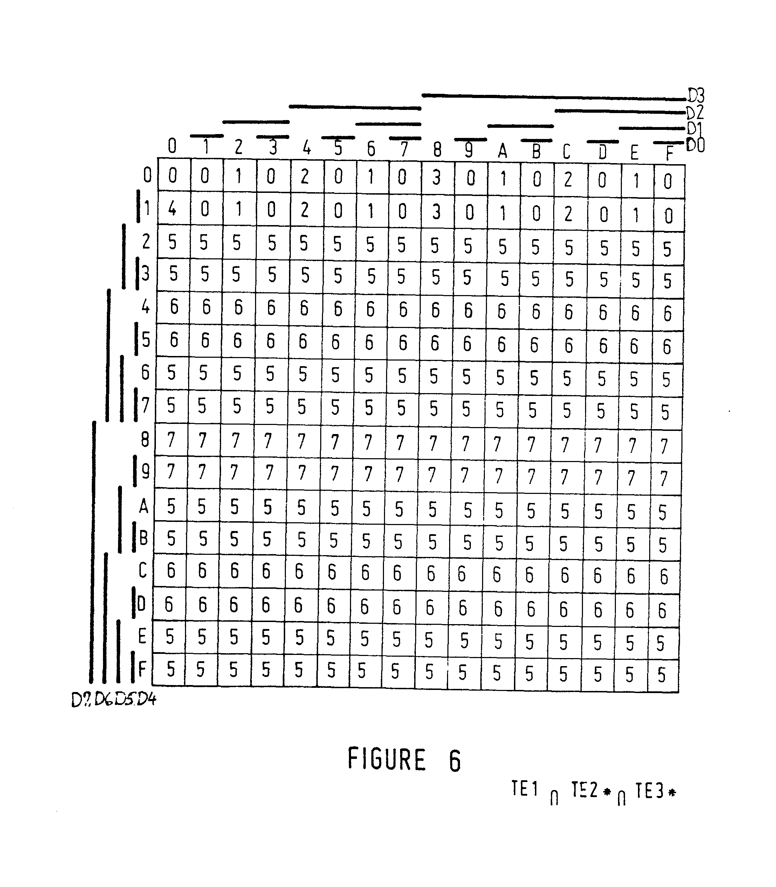

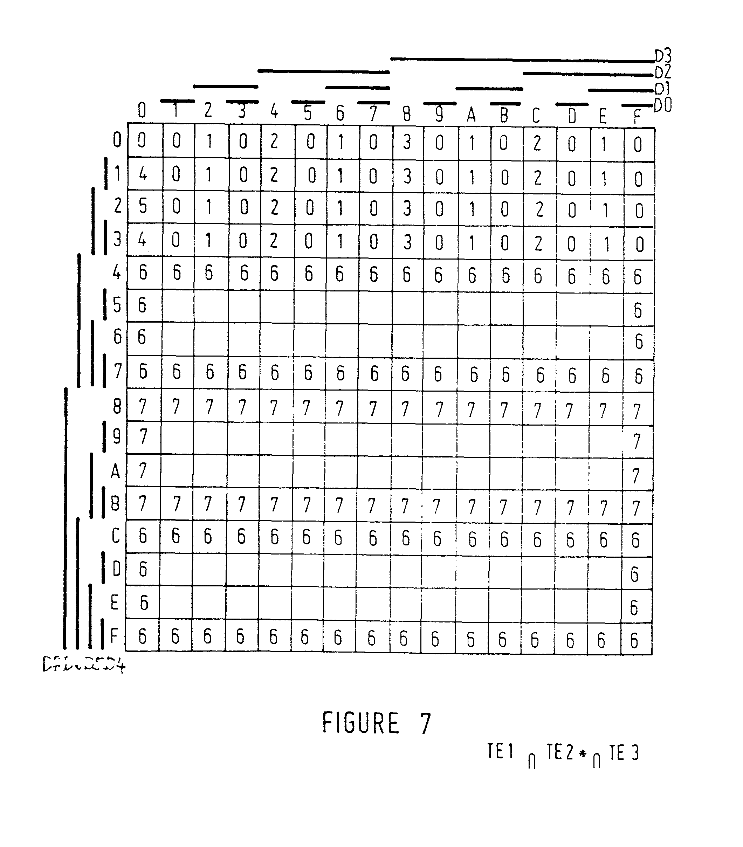

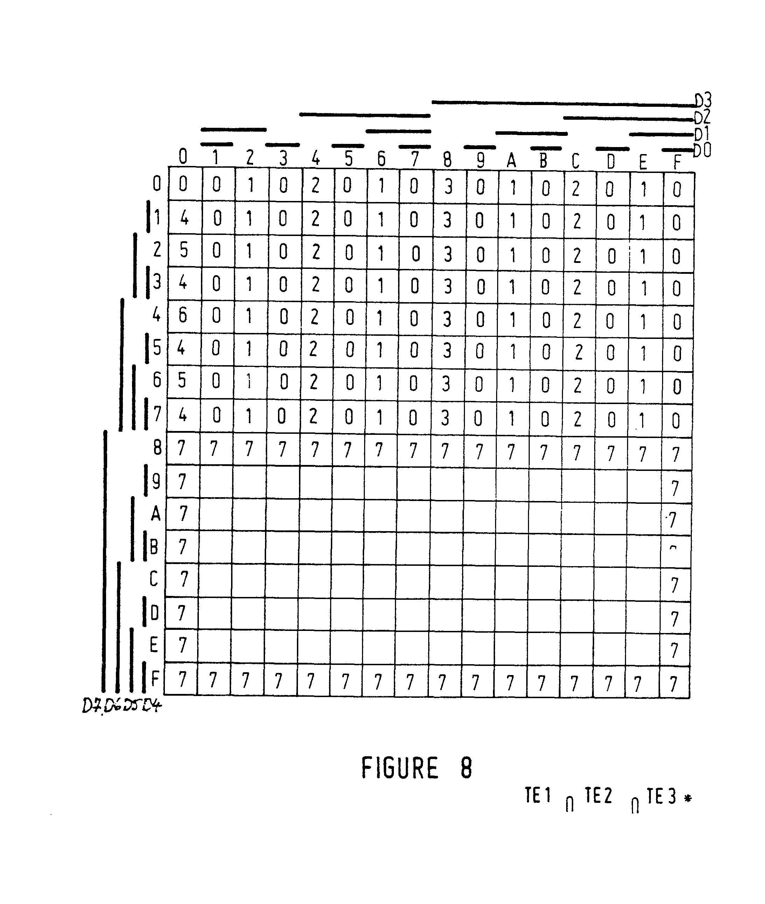

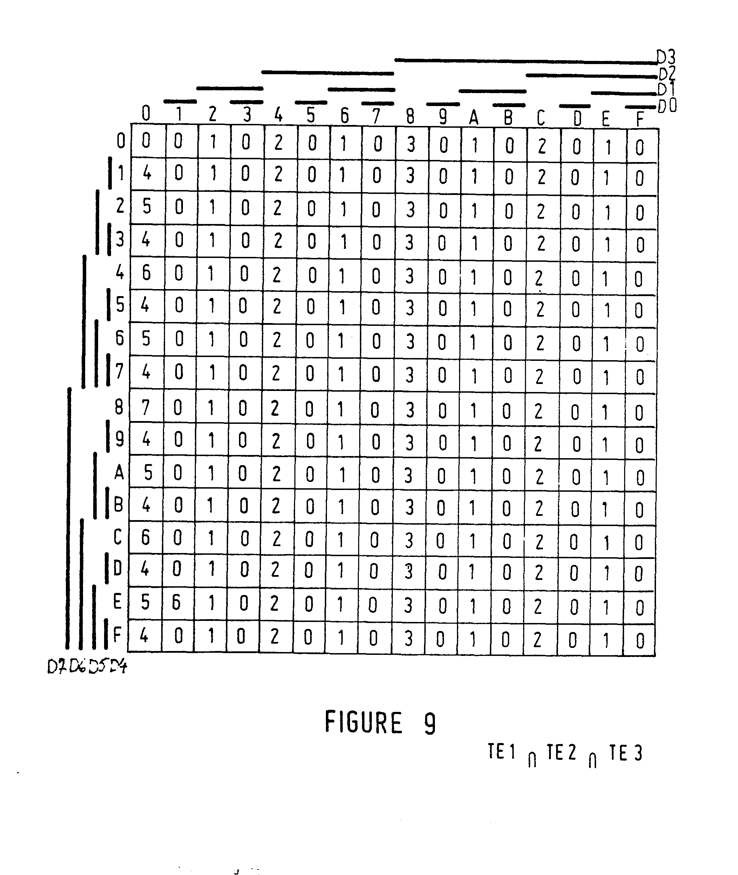

L'ensemble des tables qui sont mémorisées à l'intérieur des mémoires PRØM 9 et 10 est représenté aux figures 2 à 9. Il y a autant de tables que d'unités périphériques reliées au dispositif. Chaque table est adressée à partir du mot composé des signaux $TE_1$, $TE_2$, et $TE_3$. La combinaison $TE_1 \times ATE_2 \times ATE_3 \times$ permet d'adresser la table de la figure 2, la combinaison $TE_1 \times ATE_2 \times ATE_3$ permet l'adressage de la figure 3, la combinaison $TE_1 \times ATE_2 ATE_3$ permet l'adressage de la table de la figure 4, la combinaison $TE_1 \times ATE_2 ATE_3$ permet l'adressage de la table de la figure 5, la combinaison $TE_1 ATE_2 \times ATE_3 \times$ permet l'adressage de la table de la figure 6, la combinaison $TE_1 ATE_2 \times ATE_3$ permet l'adressage de la table de la figure 7, la combinaison $TE_1 ATE_2 ATE \times$ permet l'adressage de la table de la figure 8, la combinaison $TE_1 ATE_2 ATE_3$ permet l'adressage de la table de la figure 9. L'adressage d'un mot à l'intérieur d'une table s'opère à l'aide de la combinaison des huit signaux binaires délivrés par les sorties $D_0 \times$ à $D_7 \times$ des unités périphériques 1 à 8. Chaque emplacement contient un numéro de priorité spécifique qui apparaît aux sorties 11 à 13 des mémoires PRØM 9 et 10 lorsqu'il est adressé par les signaux $D_0 \times$ à $D_7 \times$. Un exemple de lecture de ces tables peut être donné à l'aide de la figure 3. L'adressage de

- 8 -

la table de la figure 3 est réalisée à l'aide de la combinaison $TE_1 \cdot ATE_2 \cdot ATE_3$ qui désigne l'unité périphérique numéro 1 comme étant la dernière à avoir été sollicitée par l'unité centrale de traitement. L'intersection de la colonne 3 et de la ligne 7 est constituée par le numéro de priorité 4. La colonne 3 correspond au cas où l'unité périphérique de No 0 et de l'unité périphérique de No 1 demandent simultanément un échange d'informations. La ligne 3 correspond au cas où les unités périphériques 4, 5 et 6 demandent simultanément un échange d'informations. Comme dans le cas de la figure 8 l'unité périphérique la dernière servie se trouve être l'unité 1, parmi les unités appelante 0, 1, 4, 5, 6 seule l'unité 4 est l'unité demanderesse dont le numéro suit le numéro 1. Ce même raisonnement peut être suivi pour l'ensemble des tables représentées aux figures 2 à 9.

Le fonctionnement du dispositif est le suivant. Lorsqu'une unité périphérique demande à transmettre ou à recevoir des informations elle le fait en faisant apparaître un niveau de tension différent de 0 volt sur le fil de liaison qui lui est associé parmi les liaisons $D_0 x$ à $D_7 x$. Ce niveau est transmis aux entrées correspondantes des mémoires PRØM 9 et 10. Si plusieurs unités font elles aussi la même demande il apparaît sur les liaisons $D_0 x$ à $D_7 x$ une combinaison de signaux binaires qui va définir l'adresse où se trouve le numéro de priorité qui devra être utilisé par l'unité centrale pour servir l'unité périphérique à laquelle ce numéro est affecté.

Cette adresse est aussi définie à partir de la combinaison binaire des signaux $TE_1$, $TE_2$ et $TE_3$ qui

définissent le numéro de l'unité périphérique la dernière servie et qui sont mémorisés dans le registre tampon 24. Les signaux $TE_1$, $TE_2$ et $TE_3$ permettent l'adressage d'une table de priorité parmi 8 à l'intérieur d'une mémoire PRØM 9 ou 10 alors que les signaux $D_{0x}$ à $D_{7x}$ permettent l'adressage d'un numéro de priorité de l'unité périphérique qui sera servie après celle dont le numéro est mémorisé dans le registre tampon 24. La séquence des signaux nécessaires à la transmission vers l'unité centrale de traitement du numéro de priorité lue dans les mémoires PRØM 9 et 10 se définit en deux temps. A l'instant $T_1$ le numéro lu dans une mémoire est mémorisé dans le registre tampon 23 et est ainsi mis à la disposition de l'unité centrale de traitement. Le circuit "non et" 12 génère le signal DCDA signalant qu'au moins une unité périphérique demande à recevoir ou à transmettre des informations. Ce signal DCDA est d'une part transmis à l'entrée de la bascule SR composée des circuits 14 à 17 et fait changer à l'instant $T_1$ l'état de cette bascule pour générer un signal $DC_3$ de demande de cycle dans l'unité centrale de traitement. Ce signal est d'autre part transmis à l'entrée de la bascule SR composé des portes "non et" 19 à 22 et fait changer l'état de cette bascule pour générer le signal $VDC^*$ à l'instant $T_2$ afin de verrouiller les entrées du registre 23, empêchant ainsi les données enregistrées dans ce tampon d'être modifiées. A ce même instant $T_2$ les données du registre tampon 23 sont transférées dans le registre tampon 24 modifiant ainsi la combinaison des signaux $TE_1$, $TE_2$ et $TE_3$ de ce fait une nouvelle table de priorité correspondant au nouveau numéro de priorité introduit à l'instant $T_1$ dans le registre 23 sera sélectionnée.

Lorsque l'échange d'informations entre l'unité périphérique sélectionnée et l'unité centrale de traitement est terminé un signal de fin de traitement FDT est émis par l'unité central qui remet à l'état initial le signal de verrouillage $VDC^*$ et le signal de demande de cycle $DC_3$. La séquence des signaux de synchronisation $T_1$ et $T_2$ est alors reprise et une nouvelle unité périphérique dont le numéro d'ordre suit directement le numéro de l'unité qui vient d'échanger des informations est repris.

L'exemple qui vient d'être donné d'une réalisation préférée de l'invention, n'est absolument pas limitatif, il est bien évident que l'homme de l'art, bien au fait des techniques du traitement de l'information pourra concevoir d'autres modes de réalisation de l'invention sans pour autant sortir de son cadre.

REVENDICATIONS

1. Dispositif électronique pour l'allocation des priorités à donner aux unités de périphérique en fonctionnement avec une unité centrale de traitement de données et permettant de donner la priorité à l'unité périphérique appelante dont le uméro d'ordre suit dans une permutation circulaire le numéro d'ordre de l'unité qui a déjà été servie caractérisé en ce qu'il comprend : une ou plusieurs mémoires programmables, dans lesquelles sont inscrites des tables de priorité, ainsi que des moyens d'adressage des tables de priorités commandées à partir de signaux représentatifs du numéro d'ordre de l'unité périphérique la dernière servie.

2. Dispositif électronique selon la revendication 1 caractérisé en ce que le nombre de tables enregistrées dans les mémoires programmables est égal au nombre d'unités périphériques connectées à l'unité centrale de traitement et en ce que les moyens d'adressage des mémoires programmables comprennent des premiers moyens pour pointer sur l'adresse de la table de priorité correspondant à l'unité périphérique qui a été la dernière servie ainsi que des seconds moyens de sélection, à l'intérieur de la table adressée par les premiers moyens, du numéro d'ordre de l'unité périphérique qui devra être servie.

3. Dispositif électronique selon les revendications 1 et 2 caractérisé en ce qu'en outre, les moyens d'adresage d'une ou des mémoires mortes programmables comprennent des moyens de lecture du numéro de priorité adressé par lesdits moyens d'adressage, ledit moyen de lecture étant directement relié aux dits premiers

- 2 -

moyens d'adressage pour permettre le pointage sur l'adresse de la table de priorité correspondant à l'unité périphérique qui a été la dernière servie.

4. Dispositif électronique selon la revendication 2 caractérisé en ce que les seconds moyens d'adressage sont constitués par le restant des circuits d'adressage des mémoires programmables autres que ceux utilisés pour l'adressage des tables de priorité, chaque entrée respective desdits seconds circuits d'adressage étant reliée par au moins une liaison électrique à une seule unité périhérique de sorte que , chaque unité périphérique, demandant à être servie, puisse le signaler, sur la laison qui lui est affectée, par un signal dont l'état électrique est différent de celui existant lorsque ladite unité ne fait pas de demande de service.

FIG.1

0012662

| | 0 | 1 | 2 | 3 | 4 | 5 | 6 | 7 | 8 | 9 | A | B | C | D | E | F |
|---|---|---|---|---|---|---|---|---|---|---|---|---|---|---|---|---|
| 0 | 0 | 0 | 1 | 1 | 2 | 2 | 1 | 1 | 3 | 3 | 1 | 1 | 2 | 2 | 1 | 1 |
| 1 | 4 | 4 | 1 | 1 | 2 | 2 | 1 | 1 | 3 | 3 | 1 | 1 | 2 | 2 | 1 | 1 |
| 2 | 5 | 5 | 1 | 1 | 2 | 2 | 1 | 1 | 3 | 3 | 1 | 1 | 2 | 2 | 1 | 1 |
| 3 | 4 | 4 | 1 | 1 | 2 | 2 | 1 | 1 | 3 | 3 | 1 | 1 | 2 | 2 | 1 | 1 |
| 4 | 6 | 6 | 1 | 1 | 2 | 2 | 1 | 1 | 3 | 3 | 1 | 1 | 2 | 2 | 1 | 1 |
| 5 | 4 | 4 | 1 | 1 | 2 | 2 | 1 | 1 | 3 | 3 | 1 | 1 | 2 | 2 | 1 | 1 |
| 6 | 5 | 5 | 1 | 1 | 2 | 2 | 1 | 1 | 3 | 3 | 1 | 1 | 2 | 2 | 1 | 1 |
| 7 | 4 | 4 | 1 | 1 | 2 | 2 | 1 | 1 | 3 | 3 | 1 | 1 | 2 | 2 | 1 | 1 |
| 8 | 7 | 7 | 1 | 1 | 2 | 2 | 1 | 1 | 3 | 3 | 1 | 1 | 2 | 2 | 1 | 1 |
| 9 | 4 | 4 | 1 | 1 | 2 | 2 | 1 | 1 | 3 | 3 | 1 | 1 | 2 | 2 | 1 | 1 |
| A | 5 | 5 | 1 | 1 | 2 | 2 | 1 | 1 | 3 | 3 | 1 | 1 | 2 | 2 | 1 | 1 |
| B | 4 | 4 | 1 | 1 | 2 | 2 | 1 | 1 | 3 | 3 | 1 | 1 | 2 | 2 | 1 | 1 |
| C | 6 | 6 | 1 | 1 | 2 | 2 | 1 | 1 | 3 | 3 | 1 | 1 | 2 | 2 | 1 | 1 |
| D | 4 | 4 | 1 | 1 | 2 | 2 | 1 | 1 | 3 | 3 | 1 | 1 | 2 | 2 | 1 | 1 |
| E | 5 | 5 | 1 | 1 | 2 | 2 | 1 | 1 | 3 | 3 | 1 | 1 | 2 | 2 | 1 | 1 |
| F | 4 | 4 | 1 | 1 | 2 | 2 | 1 | 1 | 3 | 3 | 1 | 1 | 2 | 2 | 1 | 1 |

D3 D2 D1 D0

D7 D6 D5 D4

FIGURE 2

$TE1* \cap TE2* \cap TE3*$

|   | 0 | 1 | 2 | 3 | 4 | 5 | 6 | 7 | 8 | 9 | A | B | C | D | E | F |
|---|---|---|---|---|---|---|---|---|---|---|---|---|---|---|---|---|
| 0 | 0 | 0 | 1 | 0 | 2 | 2 | 2 | 2 | 3 | 3 | 3 | 3 | 2 | 2 | 2 | 2 |
| 1 | 4 | 4 | 4 | 4 | 2 |   |   | 2 | 3 |   |   | 3 | 2 |   |   | 2 |
| 2 | 5 | 5 | 5 | 5 | 2 |   |   | 2 | 3 |   |   | 3 | 2 |   |   | 2 |
| 3 | 4 | 4 | 4 | 4 | 2 |   |   | 2 | 3 |   |   | 3 | 2 |   |   | 2 |
| 4 | 6 | 6 | 6 | 6 | 2 |   |   | 2 | 3 |   |   | 3 | 2 |   |   | 2 |
| 5 | 4 | 4 | 4 | 4 | 2 |   |   | 2 | 3 |   |   | 3 | 2 |   |   | 2 |
| 6 | 5 | 5 | 5 | 5 | 2 |   |   | 2 | 3 |   |   | 3 | 2 |   |   | 2 |
| 7 | 4 | 4 | 4 | 4 | 2 |   |   | 2 | 3 |   |   | 3 | 2 |   |   | 2 |
| 8 | 7 | 7 | 7 | 7 | 2 |   |   | 2 | 3 |   |   | 3 | 2 |   |   | 2 |
| 9 | 4 | 4 | 4 | 4 | 2 |   |   | 2 | 3 |   |   | 3 | 2 |   |   | 2 |
| A | 5 | 5 | 5 | 5 | 2 |   |   | 2 | 3 |   |   | 3 | 2 |   |   | 2 |
| B | 4 | 4 | 4 | 4 | 2 |   |   | 2 | 3 |   |   | 3 | 2 |   |   | 2 |
| C | 6 | 6 | 6 | 6 | 2 |   |   | 2 | 3 |   |   | 3 | 2 |   |   | 2 |
| D | 4 | 4 | 4 | 4 | 2 |   |   | 2 | 3 |   |   | 3 | 2 |   |   | 2 |
| E | 5 | 5 | 5 | 5 | 2 |   |   | 2 | 3 |   |   | 3 | 2 |   |   | 2 |
| F | 4 | 4 | 4 | 4 | 2 | 2 | 2 | 2 | 3 | 3 | 3 | 3 | 2 | 2 | 2 | 2 |

D3
D2
D1
D0

D7 D6 D5 D4

FIGURE 3

$TE1 *_\cap TE2 *_\cap TE3$

0012662

|   | 0 | 1 | 2 | 3 | 4 | 5 | 6 | 7 | 8 | 9 | A | B | C | D | E | F |
|---|---|---|---|---|---|---|---|---|---|---|---|---|---|---|---|---|
| 0 | 0 | 0 | 1 | 0 | 2 | 0 | 1 | 0 | 3 | 3 | 3 | 3 | 3 | 3 | 3 | 3 |
| 1 | 4 | 4 | 4 | 4 | 4 | 4 | 4 | 4 | 3 |   |   |   |   |   |   | 3 |
| 2 | 5 | 5 | 5 | 5 | 5 | 5 | 5 | 5 | 3 |   |   |   |   |   |   | 3 |
| 3 | 4 | 4 | 4 | 4 | 4 | 4 | 4 | 4 | 3 |   |   |   |   |   |   | 3 |
| 4 | 6 | 6 | 6 | 6 | 6 | 6 | 6 | 6 | 3 |   |   |   |   |   |   | 3 |
| 5 | 4 | 4 | 4 | 4 | 4 | 4 | 4 | 4 | 3 |   |   |   |   |   |   | 3 |
| 6 | 5 | 5 | 5 | 5 | 5 | 5 | 5 | 5 | 3 |   |   |   |   |   |   | 3 |
| 7 | 4 | 4 | 4 | 4 | 4 | 4 | 4 | 4 | 3 |   |   |   |   |   |   | 3 |
| 8 | 7 | 7 | 7 | 7 | 7 | 7 | 7 | 7 | 3 |   |   |   |   |   |   | 3 |
| 9 | 4 | 4 | 4 | 4 | 4 | 4 | 4 | 4 | 3 |   |   |   |   |   |   | 3 |
| A | 5 | 5 | 5 | 5 | 5 | 5 | 5 | 5 | 3 |   |   |   |   |   |   | 3 |
| B | 4 | 4 | 4 | 4 | 4 | 4 | 4 | 4 | 3 |   |   |   |   |   |   | 3 |
| C | 6 | 6 | 6 | 6 | 6 | 6 | 6 | 6 | 3 |   |   |   |   |   |   | 3 |
| D | 4 | 4 | 4 | 4 | 4 | 4 | 4 | 4 | 3 |   |   |   |   |   |   | 3 |
| E | 5 | 5 | 5 | 5 | 5 | 5 | 5 | 5 | 3 |   |   |   |   |   |   | 3 |
| F | 4 | 4 | 4 | 4 | 4 | 4 | 4 | 4 | 3 | 3 | 3 | 3 | 3 | 3 | 3 | 3 |

D3 D2 D1 D0

D7 D6 D5 D4

FIGURE 4

$TE1*_\cap TE2_\cap TE3*$

| | 0 | 1 | 2 | 3 | 4 | 5 | 6 | 7 | 8 | 9 | A | B | C | D | E | F |
|---|---|---|---|---|---|---|---|---|---|---|---|---|---|---|---|---|
| 0 | 0 | 0 | 1 | 0 | 2 | 0 | 1 | 0 | 3 | 0 | 1 | 0 | 2 | 0 | 1 | 0 |
| 1 | 4 | 4 | 4 | 4 | 4 | 4 | 4 | 4 | 4 | 4 | 4 | 4 | 4 | 4 | 4 | 4 |
| 2 | 5 | 5 | 5 | 5 | 5 | 5 | 5 | 5 | 5 | 5 | 5 | 5 | 5 | 5 | 5 | 5 |
| 3 | 4 | 4 | 4 | 4 | 4 | 4 | 4 | 4 | 4 | 4 | 4 | 4 | 4 | 4 | 4 | 4 |
| 4 | 6 | 6 | 6 | 6 | 6 | 6 | 6 | 6 | 6 | 6 | 6 | 6 | 6 | 6 | 6 | 6 |
| 5 | 4 | 4 | 4 | 4 | 4 | 4 | 4 | 4 | 4 | 4 | 4 | 4 | 4 | 4 | 4 | 4 |
| 6 | 5 | 5 | 5 | 5 | 5 | 5 | 5 | 5 | 5 | 5 | 5 | 5 | 5 | 5 | 5 | 5 |
| 7 | 4 | 4 | 4 | 4 | 4 | 4 | 4 | 4 | 4 | 4 | 4 | 4 | 4 | 4 | 4 | 4 |
| 8 | 7 | 7 | 7 | 7 | 7 | 7 | 7 | 7 | 7 | 7 | 7 | 7 | 7 | 7 | 7 | 7 |
| 9 | 4 | 4 | 4 | 4 | 4 | 4 | 4 | 4 | 4 | 4 | 4 | 4 | 4 | 4 | 4 | 4 |
| A | 5 | 5 | 5 | 5 | 5 | 5 | 5 | 5 | 5 | 5 | 5 | 5 | 5 | 5 | 5 | 5 |
| B | 4 | 4 | 4 | 4 | 4 | 4 | 4 | 4 | 4 | 4 | 4 | 4 | 4 | 4 | 4 | 4 |
| C | 6 | 6 | 6 | 6 | 6 | 6 | 6 | 6 | 6 | 6 | 6 | 6 | 6 | 6 | 6 | 6 |
| D | 4 | 4 | 4 | 4 | 4 | 4 | 4 | 4 | 4 | 4 | 4 | 4 | 4 | 4 | 4 | 4 |
| E | 5 | 5 | 5 | 5 | 5 | 5 | 5 | 5 | 5 | 5 | 5 | 5 | 5 | 5 | 5 | 5 |
| F | 4 | 4 | 4 | 4 | 4 | 4 | 4 | 4 | 4 | 4 | 4 | 4 | 4 | 4 | 4 | 4 |

D3 D2 D1 D0

D7 D6 D5 D4

FIGURE 5

TE1 *∩ TE2 *∩ TE3

| | 0 | 1 | 2 | 3 | 4 | 5 | 6 | 7 | 8 | 9 | A | B | C | D | E | F |
|---|---|---|---|---|---|---|---|---|---|---|---|---|---|---|---|---|
| 0 | 0 | 0 | 1 | 0 | 2 | 0 | 1 | 0 | 3 | 0 | 1 | 0 | 2 | 0 | 1 | 0 |
| 1 | 4 | 0 | 1 | 0 | 2 | 0 | 1 | 0 | 3 | 0 | 1 | 0 | 2 | 0 | 1 | 0 |
| 2 | 5 | 5 | 5 | 5 | 5 | 5 | 5 | 5 | 5 | 5 | 5 | 5 | 5 | 5 | 5 | 5 |
| 3 | 5 | 5 | 5 | 5 | 5 | 5 | 5 | 5 | 5 | 5 | 5 | 5 | 5 | 5 | 5 | 5 |
| 4 | 6 | 6 | 6 | 6 | 6 | 6 | 6 | 6 | 6 | 6 | 6 | 6 | 6 | 6 | 6 | 6 |
| 5 | 6 | 6 | 6 | 6 | 6 | 6 | 6 | 6 | 6 | 6 | 6 | 6 | 6 | 6 | 6 | 6 |
| 6 | 5 | 5 | 5 | 5 | 5 | 5 | 5 | 5 | 5 | 5 | 5 | 5 | 5 | 5 | 5 | 5 |
| 7 | 5 | 5 | 5 | 5 | 5 | 5 | 5 | 5 | 5 | 5 | 5 | 5 | 5 | 5 | 5 | 5 |
| 8 | 7 | 7 | 7 | 7 | 7 | 7 | 7 | 7 | 7 | 7 | 7 | 7 | 7 | 7 | 7 | 7 |
| 9 | 7 | 7 | 7 | 7 | 7 | 7 | 7 | 7 | 7 | 7 | 7 | 7 | 7 | 7 | 7 | 7 |
| A | 5 | 5 | 5 | 5 | 5 | 5 | 5 | 5 | 5 | 5 | 5 | 5 | 5 | 5 | 5 | 5 |
| B | 5 | 5 | 5 | 5 | 5 | 5 | 5 | 5 | 5 | 5 | 5 | 5 | 5 | 5 | 5 | 5 |
| C | 6 | 6 | 6 | 6 | 6 | 6 | 6 | 6 | 6 | 6 | 6 | 6 | 6 | 6 | 6 | 6 |
| D | 6 | 6 | 6 | 6 | 6 | 6 | 6 | 6 | 6 | 6 | 6 | 6 | 6 | 6 | 6 | 6 |
| E | 5 | 5 | 5 | 5 | 5 | 5 | 5 | 5 | 5 | 5 | 5 | 5 | 5 | 5 | 5 | 5 |
| F | 5 | 5 | 5 | 5 | 5 | 5 | 5 | 5 | 5 | 5 | 5 | 5 | 5 | 5 | 5 | 5 |

D3 D2 D1 D0

D7 D6 D5 D4

FIGURE 6

TE1 ∩ TE2* ∩ TE3*

|   | 0 | 1 | 2 | 3 | 4 | 5 | 6 | 7 | 8 | 9 | A | B | C | D | E | F |
|---|---|---|---|---|---|---|---|---|---|---|---|---|---|---|---|---|
| 0 | 0 | 0 | 1 | 0 | 2 | 0 | 1 | 0 | 3 | 0 | 1 | 0 | 2 | 0 | 1 | 0 |
| 1 | 4 | 0 | 1 | 0 | 2 | 0 | 1 | 0 | 3 | 0 | 1 | 0 | 2 | 0 | 1 | 0 |
| 2 | 5 | 0 | 1 | 0 | 2 | 0 | 1 | 0 | 3 | 0 | 1 | 0 | 2 | 0 | 1 | 0 |
| 3 | 4 | 0 | 1 | 0 | 2 | 0 | 1 | 0 | 3 | 0 | 1 | 0 | 2 | 0 | 1 | 0 |
| 4 | 6 | 6 | 6 | 6 | 6 | 6 | 6 | 6 | 6 | 6 | 6 | 6 | 6 | 6 | 6 | 6 |
| 5 | 6 |   |   |   |   |   |   |   |   |   |   |   |   |   |   | 6 |
| 6 | 6 |   |   |   |   |   |   |   |   |   |   |   |   |   |   | 6 |
| 7 | 6 | 6 | 6 | 6 | 6 | 6 | 6 | 6 | 6 | 6 | 6 | 6 | 6 | 6 | 6 | 6 |
| 8 | 7 | 7 | 7 | 7 | 7 | 7 | 7 | 7 | 7 | 7 | 7 | 7 | 7 | 7 | 7 | 7 |
| 9 | 7 |   |   |   |   |   |   |   |   |   |   |   |   |   |   | 7 |
| A | 7 |   |   |   |   |   |   |   |   |   |   |   |   |   |   | 7 |
| B | 7 | 7 | 7 | 7 | 7 | 7 | 7 | 7 | 7 | 7 | 7 | 7 | 7 | 7 | 7 | 7 |
| C | 6 | 6 | 6 | 6 | 6 | 6 | 6 | 6 | 6 | 6 | 6 | 6 | 6 | 6 | 6 | 6 |
| D | 6 |   |   |   |   |   |   |   |   |   |   |   |   |   |   | 6 |
| E | 6 |   |   |   |   |   |   |   |   |   |   |   |   |   |   | 6 |
| F | 6 | 6 | 6 | 6 | 6 | 6 | 6 | 6 | 6 | 6 | 6 | 6 | 6 | 6 | 6 | 6 |

D3
D2
D1
D0

## FIGURE 7

$TE1 \cap TE2 * \cap TE3$

| | 0 | 1 | 2 | 3 | 4 | 5 | 6 | 7 | 8 | 9 | A | B | C | D | E | F |
|---|---|---|---|---|---|---|---|---|---|---|---|---|---|---|---|---|
| 0 | 0 | 0 | 1 | 0 | 2 | 0 | 1 | 0 | 3 | 0 | 1 | 0 | 2 | 0 | 1 | 0 |
| 1 | 4 | 0 | 1 | 0 | 2 | 0 | 1 | 0 | 3 | 0 | 1 | 0 | 2 | 0 | 1 | 0 |
| 2 | 5 | 0 | 1 | 0 | 2 | 0 | 1 | 0 | 3 | 0 | 1 | 0 | 2 | 0 | 1 | 0 |
| 3 | 4 | 0 | 1 | 0 | 2 | 0 | 1 | 0 | 3 | 0 | 1 | 0 | 2 | 0 | 1 | 0 |
| 4 | 6 | 0 | 1 | 0 | 2 | 0 | 1 | 0 | 3 | 0 | 1 | 0 | 2 | 0 | 1 | 0 |
| 5 | 4 | 0 | 1 | 0 | 2 | 0 | 1 | 0 | 3 | 0 | 1 | 0 | 2 | 0 | 1 | 0 |
| 6 | 5 | 0 | 1 | 0 | 2 | 0 | 1 | 0 | 3 | 0 | 1 | 0 | 2 | 0 | 1 | 0 |
| 7 | 4 | 0 | 1 | 0 | 2 | 0 | 1 | 0 | 3 | 0 | 1 | 0 | 2 | 0 | 1 | 0 |
| 8 | 7 | 7 | 7 | 7 | 7 | 7 | 7 | 7 | 7 | 7 | 7 | 7 | 7 | 7 | 7 | 7 |
| 9 | 7 | | | | | | | | | | | | | | | 7 |
| A | 7 | | | | | | | | | | | | | | | 7 |
| B | 7 | | | | | | | | | | | | | | | 7 |
| C | 7 | | | | | | | | | | | | | | | 7 |
| D | 7 | | | | | | | | | | | | | | | 7 |
| E | 7 | | | | | | | | | | | | | | | 7 |
| F | 7 | 7 | 7 | 7 | 7 | 7 | 7 | 7 | 7 | 7 | 7 | 7 | 7 | 7 | 7 | 7 |

D3
D2
D1
D0

D7 D6 D5 D4

FIGURE 8

TE1 ∩ TE2 ∩ TE3 *

0012662

|   | 0 | 1 | 2 | 3 | 4 | 5 | 6 | 7 | 8 | 9 | A | B | C | D | E | F |
|---|---|---|---|---|---|---|---|---|---|---|---|---|---|---|---|---|
| 0 | 0 | 0 | 1 | 0 | 2 | 0 | 1 | 0 | 3 | 0 | 1 | 0 | 2 | 0 | 1 | 0 |
| 1 | 4 | 0 | 1 | 0 | 2 | 0 | 1 | 0 | 3 | 0 | 1 | 0 | 2 | 0 | 1 | 0 |
| 2 | 5 | 0 | 1 | 0 | 2 | 0 | 1 | 0 | 3 | 0 | 1 | 0 | 2 | 0 | 1 | 0 |
| 3 | 4 | 0 | 1 | 0 | 2 | 0 | 1 | 0 | 3 | 0 | 1 | 0 | 2 | 0 | 1 | 0 |
| 4 | 6 | 0 | 1 | 0 | 2 | 0 | 1 | 0 | 3 | 0 | 1 | 0 | 2 | 0 | 1 | 0 |
| 5 | 4 | 0 | 1 | 0 | 2 | 0 | 1 | 0 | 3 | 0 | 1 | 0 | 2 | 0 | 1 | 0 |
| 6 | 5 | 0 | 1 | 0 | 2 | 0 | 1 | 0 | 3 | 0 | 1 | 0 | 2 | 0 | 1 | 0 |
| 7 | 4 | 0 | 1 | 0 | 2 | 0 | 1 | 0 | 3 | 0 | 1 | 0 | 2 | 0 | 1 | 0 |
| 8 | 7 | 0 | 1 | 0 | 2 | 0 | 1 | 0 | 3 | 0 | 1 | 0 | 2 | 0 | 1 | 0 |
| 9 | 4 | 0 | 1 | 0 | 2 | 0 | 1 | 0 | 3 | 0 | 1 | 0 | 2 | 0 | 1 | 0 |
| A | 5 | 0 | 1 | 0 | 2 | 0 | 1 | 0 | 3 | 0 | 1 | 0 | 2 | 0 | 1 | 0 |
| B | 4 | 0 | 1 | 0 | 2 | 0 | 1 | 0 | 3 | 0 | 1 | 0 | 2 | 0 | 1 | 0 |
| C | 6 | 0 | 1 | 0 | 2 | 0 | 1 | 0 | 3 | 0 | 1 | 0 | 2 | 0 | 1 | 0 |
| D | 4 | 0 | 1 | 0 | 2 | 0 | 1 | 0 | 3 | 0 | 1 | 0 | 2 | 0 | 1 | 0 |
| E | 5 | 6 | 1 | 0 | 2 | 0 | 1 | 0 | 3 | 0 | 1 | 0 | 2 | 0 | 1 | 0 |
| F | 4 | 0 | 1 | 0 | 2 | 0 | 1 | 0 | 3 | 0 | 1 | 0 | 2 | 0 | 1 | 0 |

D3
D2
D1
D0

D7 D6 D5 D4

FIGURE 9

TE1 ∩ TE2 ∩ TE3

Office européen
des brevets

**RAPPORT DE RECHERCHE EUROPEENNE**

001.2662

Numéro de la demande

EP 79 40 0955

## DOCUMENTS CONSIDERES COMME PERTINENTS

| Catégorie | Citation du document avec indication, en cas de besoin, des parties pertinentes | Revendication concernee |
|---|---|---|
| X | COMPUTER DESIGN, vol. 17, no. 4, avril 1978, Concord US HOJBERG: "One-step programmable arbiters for multiprocessors" pages 154-156 et 158<br><br>* Page 154, deuxième colonne lignes 4-11, 17-18, troisième colonne, lignes 6-8, 17-20; page 155, première colonne lignes 1-19, 54-63, deuxième colonne, lignes 1-2, 20-26; troixième colonne, lignes 1-5; figure 1; table 1 de la page 156; page 158, lignes 36-38 *<br><br>-- | 1-4 |
| | FR - A - 2 154 968 (LA TELEMECA-NIQUE ELECTRIQUE)<br><br>* Page 1, lignes 34-40; page 2, lignes 1-22, 34-40; page 3, lignes 1-9; page 5, lignes 4-40; page 6, lignes 1-22 et figure 2 *<br><br>-- | 1-4 |
| A | US - A - 4 009 470 (SPERRY RAND)<br><br>* Colonne 1, lignes 24-47; colonne 2, lignes 29-50; table A; colonne 3; colonne 4, lignes 1-12, table C; colonne 5, lignes 40-68; colonne 6, lignes 14-46; table D, figures 2 et 5 *<br><br>---- | 1 |

**CLASSEMENT DE LA DEMANDE (Int. Cl. 3)**

G 06 F 3/04

**DOMAINES TECHNIQUES RECHERCHES (Int. Cl. 3)**

G 06 F  3/04
G 06 F  9/46
G 06 F  13/00

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achevement de la recherche | Examinateur |
|---|---|---|
| La Haye | 21-02-1980 | DHEERE |

OEB Form 1503.1  06.78